# EUROPEAN PATENT APPLICATION

(11) **EP 3 130 794 A1**
(43) Date of publication of application: **15.02.2017**
(21) Application number: 15833598.4
(22) Date of filing: 05.08.2015
(51) Int. Cl.: F02P 19/02, H05B 3/02, F01P 7/16

(54) **GLOW PLUG ASSEMBLY HAVING DOUBLE TERMINAL**

(30) Priority: 19.08.2014 KR 20140107462
(71) Applicant: Daejin Glowtech Inc., Sejong 30036 (KR)
(72) Inventor: PARK, Dae-Hoon, Cheongju-si Chungcheongbuk-do 28382 (KR)
(74) Representative: dompatent von Kreisler Selting Werner - Partnerschaft von Patent- und Rechtsanwälten mbB
(86) International application number: PCT/KR2015/008176
(87) International publication number: WO 2016/028015

(57) **Abstract**

Disclosed a glow plug assembly having dual terminals formed to enable a fast response and reliable control thereof by preventing noise generation caused by grounding, and the assembly including: a housing; a heating tube; a cap; first and second terminals of which lower parts enter inside the heating tube; and a heating coil of which opposite ends are engaged with the first and the second terminals, and a winding part is placed close to the heating tube, wherein the first terminal is shorter than the second terminal in length and is engaged with the heating coil, and the second terminal extends downward to be longer than the first terminal in length, and has a bent part that leads the second terminal to a center of the wound heating coil to secure an insulation space relative to the heating coil, and is engaged with the heating coil.

## Description

### Technical Field

The present invention relates generally to a glow plug assembly having dual terminals. More particularly, the present invention relates to a glow plug assembly having dual terminals, the assembly configured to couple a positive (+) terminal and a negative (-) terminal to each other, thereby preventing noise generation caused by a negative (-) ground and enabling a fast response to an ECU and reliable control thereof.

### Background Art

In general, a glow plug is employed for use in a pre-heating of an internal combustion engine, or is employed as an actuator of a thermostat.

Such a conventional glow plug disclosed in the related art (Korean Patent Application Publication Nos. 10-2009-0127448, and 10-2010-0060607, and Korean Patent No. 1,115,006) is normally configured with only a positive (+) terminal formed, and a negative (-) terminal grounded.

This is because there is a difficulty in securing an insulation space due to a standardized heating tube having a limited space. Thus, it is difficult to simultaneously insert the positive (+) terminal and the negative (-) terminal into the heating tube.

Further, "a glow plug and an electronic thermostat including the same" (Korean Patent Application No. 2003-0114505) is disclosed as a patent using a glow plug in the actuator of the thermostat.

Such a conventional thermostat is configured wherein the positive (+) terminal is coupled with a terminal, and the negative (-) terminal is grounded to a body of the thermostat, so that an ECU of a vehicle controls the glow plug.

However, the aforementioned conventional thermostat is problematic in that the negative (-) terminal is double grounded to the thermostat, or potential difference of the negative (-) terminal causes noise generation in communication with the ECU of the vehicle, thereby resulting in malfunction.

Thus, there is a requirement for a glow plug configured to be capable of simultaneously inserting the positive (+) terminal and the negative (-) terminal into the limited space of the heating tube in such a manner as to prevent noise generation or potential difference due to a negative (-) ground.

### Disclosure

### Technical Problem

Accordingly, the present invention has been made keeping in mind the above problems occurring in the related art. A first object of the present invention is to propose a glow plug assembly having dual terminals, the assembly configured to couple two positive (+) and negative (-) terminals with each other, thereby preventing noise generation caused by a negative ground and enabling a fast response to an ECU and reliable control thereof.

A second object of the present invention is to propose a glow plug assembly having dual terminals, the assembly configured to couple two positive (+) and negative (-) terminals with a heating coil in a limited space while having the same performance as a conventional heating tube having only the positive (+) terminal.

A third object of the present invention is to propose a glow plug assembly having dual terminals, the assembly configured with each of a first terminal and a second terminal having a square cross-section, thereby securing an insulation distance therebetween while having the same cross-sectional area and the same current capacity as those of a terminal having a circular cross-section.

### Technical Solution

In order to achieve the above object, according to an embodiment of the present invention, there is provided a glow plug assembly having dual terminals, wherein the assembly is configured to enable a fast response and reliable control thereof by preventing noise generation caused by grounding, and the assembly may include: a housing extending in an axial direction; a heating tube coupled to a lower part of the housing, and filled with insulation powder therein; a cap fixed to an upper end of the housing; a first terminal and a second terminal of which upper parts are fixed to the cap, and lower parts enter inside the heating tube; and a heating coil of which opposite ends are respectively engaged with second ends of the first terminal and the second terminal, and a winding part is placed close to an inner circumferential surface of the heating tube, wherein the first terminal is configured to be relatively shorter than the second terminal in length and is engaged with a first end of the heating coil at the second end thereof, and the second terminal extends downward to be relatively longer than the first terminal in length, and has a bent part that leads the second terminal to a center of the wound heating coil so as to secure an insulation space relative to the heating coil, and is engaged with a second end of the heating coil extending down to an inside lower part of the heating tube.

In another embodiment, the glow plug of the embodiment is characterized in that the winding part of the heating coil may have an eccentric upper end with which the first terminal is engaged, and the bent part of the second terminal may lead the second terminal to the center of the heating coil while enabling the second terminal and the first terminal to secure a standardized distance therebetween.

In a further embodiment, the glow plug of the embodiment is characterized in that the bent part of the second terminal may be sheathed or coated with an insulation material.

In still another embodiment, the glow plug of the embodiment is characterized in that each of the first terminal and the second terminal may have a square cross-section so as to secure an insulation distance therebetween.

In yet another embodiment, the glow plug of the embodiment is characterized in that the heating coil may be resistance-welded to surfaces of the first and the second terminals at bent parts formed by bending the opposite ends of the heating coil in an inward direction of the winding part of the heating coil.

In yet another embodiment, the present invention is characterized in that the assembly of the embodiment may be employed for use in an electronic thermostat that controls a temperature of a coolant of a vehicle engine.

### Advantageous Effects

According to the glow plug assembly having dual terminals having the above-described characteristics, it is possible to prevent noise generation caused by the negative ground and enable the fast response to the ECU and reliable control thereof by coupling two positive (+) and negative (-) terminals with each other.

Further, since the assembly is configured with the first terminal and the second terminal having square cross-sections, it is possible to secure a desired insulation distance therebetween while having the same cross-sectional area and the same current capacity as those of a terminal having a circular cross-section.

Further, by securing the insulation distance between the terminals, it is possible to minimize defects of products in a mass production process, to reduce the manufacturing time, and to obtain an additional effect of increasing packing density of insulation powder.

Further, by securing the insulation distance between the terminals, the first terminal, second terminal, the heating coil, and the heating tube are prevented from coming into contact with each other, and the heating coil is prevented from a short-circuit caused by thermal expansion, vibration, and external shock. Thus, it is possible to reduce a defect rate.

### Description of Drawings

FIG. 1 is a view illustrating a configuration of a glow plug assembly having dual terminals according to a first embodiment of the present invention.
FIG. 2 is a view illustrating a configuration of a glow plug assembly having dual terminals according to a second embodiment of the present invention.
FIG. 3 shows cross-sectional views taken along line A-A' of FIG .1 and B-B' of FIG. 2.
FIG. 4 is a cross-sectional view taken along line C-C' of FIG. 2.
FIG. 5 is a conceptual diagram illustrating a glow plug assembly having dual terminals adapted for use in a thermostat.

### Best Mode

The exemplary embodiments according to the concept of the present invention may be variously modified and may have various shapes, so examples of which are illustrated in the accompanying drawings will be described in detail with reference to the accompanying drawings. However, it should be understood that the exemplary embodiments according to the concept of the present invention are not limited to the embodiments that will be described hereinbelow with reference to the accompanying drawings, but various modifications, equivalents, additions and substitutions are possible, without departing from the scope and spirit of the invention.

Further, in the description of the present invention, when it is determined that the detailed description of the related art would obscure the gist of the present invention, the description thereof will be omitted. Further, it will be understood that, the terms (e.g. first, second, etc.) used in the description of the present invention are only to distinguish one element, from another element.

Further, in the specification, it will be understood that when an element is referred to as being "coupled" or "connected" to another element, it can be directly coupled or connected to the other element or intervening elements may be present therebetween.

### [Embodiment 1]

Hereinafter, a glow plug assembly having dual terminals according to the present invention will be described in detail with reference to the accompanying drawings.

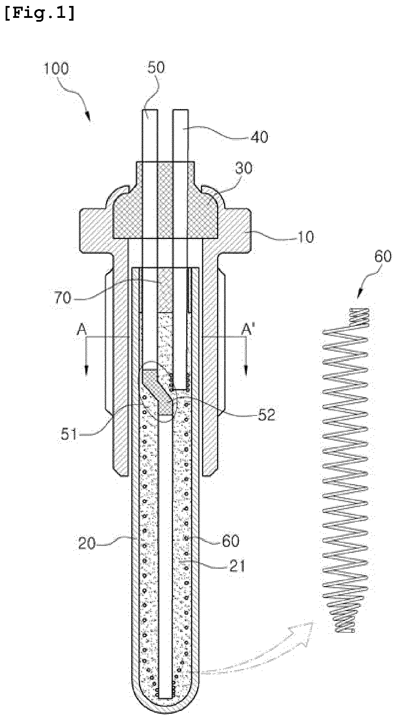

FIG. 1 is a cross-sectional configuration diagram illustrating the glow plus assembly having dual terminals according to a first embodiment of the present invention.

As shown in FIG. 1, the present invention relates to the glow plug assembly 100 having dual terminals configured to couple two positive (+) and negative (-) terminals with each other, thereby preventing noise generation caused by a negative ground and enabling a fast response to an ECU and reliable control thereof.

The glow plug assembly 100 having dual terminals is configured with a housing 10, a heating tube 20, a cap 30, first and second terminals 40 and 50, and a heating coil 60.

The housing 10 is configured to extend in an axial direction, and is configured in which the cap 30 is fixed to an upper portion and the heating tube 20 is inserted into a lower portion.

The first and second terminals 40 and 50 are spaced apart from each other and are fixed to the cap 30. Here, first sides of the first and second terminals 40 and 50 are partially exposed to an upper portion of the cap 30 such that the first and second terminals 40 and 50 are respectively connected to a negative (-) terminal and a positive (+) terminal that are connected to an ECU 300.

Here, the first and second terminals 40 and 50 extend downwardly in such a manner as to enter inside the heating tube 20.

Here, the first terminal 40 and the second terminal 50 have different lengths so as to respectively engage with a first end and a second end of the heating coil 60.

Moreover, the heating coil 60 is configured as a wound-type resistor. A winding part is placed close to an inner circumferential surface of the heating tube 20 in such a manner as to maximize heat radiation efficiency of the heating tube 20.

The winding part of the heating coil 60 has an eccentric upper end with which the first terminal 40 having the positive (+) terminal is engaged.

Further, since the first terminal 40 is engaged with a first end of the heating coil 60, it has a relatively shorter length than that of the second terminal 50.

Moreover, the second terminal 50 having the negative (-) terminal is configured such that a second end of the second terminal 50 is engaged with a second end of the heating coil 60 while passing through an inside center of the heating coil 60.

Here, the second terminal 50 has a bent part 51 so as to secure a distance between the second terminal and the first terminal 40 and an insulation space relative to the heating coil 60.

Here, the bent part 51 is sheathed or coated with an insulator 52 so as to prevent coming into contact with the first terminal 40 and the heating coil 60.

The insulator 52 is locally sheathed or coated only on the bent part 51. However, it is permissible for the insulator 52 to be sheathed or coated even on a lower part of the second terminal 50.

In the meantime, a first end of the heating tube 20 is open inside the housing 10 such that the first and the second terminals 40 and 50 and the heating coil 60 enter inside the heating tube 20. The heating tube 20 is made of a stainless steel having improved heat and corrosion resistance. Here, a lower end part of the heating tube 20 is closed in the form of a hemisphere.

The heating tube 20 is filled with insulation powder 21 therein. The insulation powder 21 may be magnesium oxide (MgO) powder having heat resistance.

Here, the insulation powder 21 performs a function of improving efficiency of thermal conduction due to increased fineness, maintaining insulation between the first and second terminals 40 and 50 and the heating coil 60, preventing movement of the heating coil 60, and transferring heat generated from the heating coil 60 to the heating tube 20.

Further, the heating tube 20 may be configured with a seal member 70 inserted so as to seal the insulation powder 21.

In the meantime, the heating coil 60 is partially wound at a second end of each of the first and second terminals 40 and 50 and is engaged therewith by resistance welding.

As described above, the glow plug having dual terminals according to the first embodiment of the present invention has a configuration in which the winding part of the heating coil 60 has the eccentric upper end, and the second terminal 50 has the bent part 51 such that two positive (+) and negative (-) terminals are engaged with the heating coil within a limited space of a standardized heating tube 20. Thus, it is possible to enable a fast response to an ECU and reliable control thereof while having the same performance as a conventional heating tube having only a positive (+) terminal.

### [Embodiment 2]

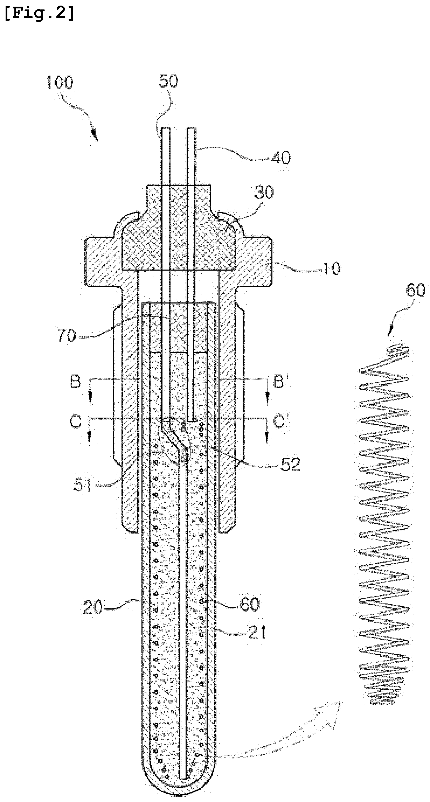

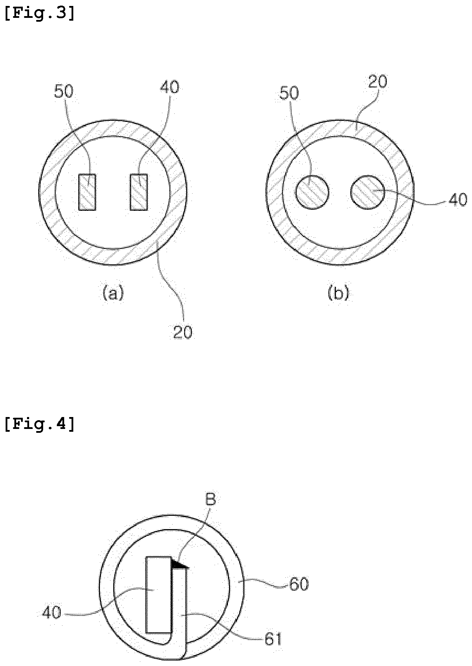

FIG. 2 is a view illustrating a configuration of a glow plug assembly having dual terminals according to a second embodiment of the present invention. FIGS. 3A and 3B are cross-sectional views taken along line A-A' of FIG .1 and B-B' of FIG. 2, respectively. FIG. 4 is a cross-sectional view taken along line C-C' of FIG. 2.

As shown in FIGS. 2 to 4, the second embodiment includes the first embodiment, and the first and second terminals 40 and 50 have cross-sections in the form of a square so as to secure an insulation distance therebetween.

As shown in FIG. 3A, the first and second terminals 40 and 50 have cross-sections in the form of the square.

Such a configuration is intended to secure the insulation distance between the first terminal 40 and the second terminal 50 in the heating tube 20 while having the same cross-sectional area and the same current capacity as those of a terminal having a circular cross-section shown in FIG. 3B of the first embodiment.

By securing the insulation distance in such a manner, it is possible to minimize defects of products in a mass production process, reduce the manufacturing time, and obtain an additional effect of increasing packing density of insulation powder 21.

Moreover, by securing the insulation distance, the first terminal 40, second terminal 50, the heating coil 60, and the heating tube 20 can be prevented from coming into contact with each other, and the heating coil 60 can be prevented from a short circuit caused by thermal expansion, vibration, and external shock. Thus, it is possible to achieve a reduction in defect rate.

In the meantime, as shown in FIG. 4, the heating coil 60 is configured with bent parts 61 formed by horizontally bending opposite ends of the winding part in an inward direction.

The bent parts 61 are respectively engaged with surfaces of the first terminal 40 and the second terminal 50 by resistance welding. Accordingly, the heating coil 60 can be easily resistance-welded to plane surfaces of the first terminal 40 and the second terminal 50, respectively.

Furthermore, by securing the insulation distance between the terminals, the heating coil 60 has a structure capable of placing the remaining winding part except the bent part 61 on a circumference of each of the first and second terminals 40 and 50.

In particular, as shown in Fig. 4, a weld bead (B: Bead) produced during resistance welding of the bent part 61 and the second terminal 50 is positioned within a diameter of the winding part of the heating coil 60, thereby preventing grounding between the weld bead B and the heating tube 20. Thus, it is possible to provide a structure capable of producing a glow plug assembly having dual terminals with further improved durability.

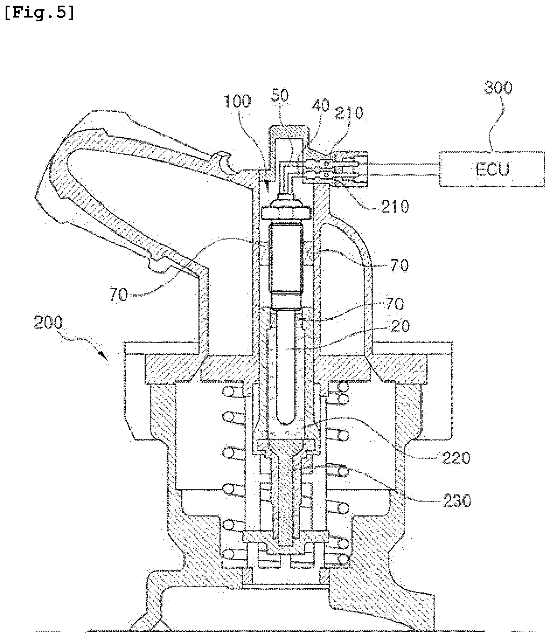

FIG. 5 is a conceptual diagram illustrating a glow plug assembly having dual terminals adapted for use in a thermostat.

As shown in FIG. 5, the glow plug assembly 100 having dual terminals can be employed for use in an electronic thermostat 200 that controls a temperature of a coolant of a vehicle engine.

Here, the thermostat 200 is configured to control the temperature of the coolant of the vehicle engine.

Here, the present invention may have a configuration in which the glow plug assembly 100 having dual terminals is fixed inside the electronic thermostat 200 by using the seal member 70, the first terminal 40 having a positive (+) electrode and the second terminal 50 having a negative (-) electrode are connected to a connector 210, and the connector 210 is connected to an ECU 300 of the vehicle.

Here, the heating tube 20 is placed on working fluid 220. The working fluid 220 expands in accordance with heat generation of the heating tube 20, then an actuator 230, such as a piston, is forced accordingly, and thus a valve can be operated.

Here, since the ECU 300 is directly connected to the first terminal 40 and the second terminal 50 of the glow plug assembly 100, it is possible to restrain noise (double grounding of the negative (-) terminal or potential difference with the negative (-) terminal) generation in communication with the ECU 300.

Thus, the thermostat 200 to which the present invention is applied can achieve a fast response to the ECU 300 and reliable control thereof.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

### <Description of the Reference Numerals in the Drawings>

| | | | |
|---|---|---|---|
| 10: | housing | | |
| 20: | heating tube | 21: | insulation powder |
| 30: | cap | | |
| 40: | first terminal | | |
| 50: | second terminal | 51: | bent part 52: insulator |
| 60: | heating coil | 61: | bent part |
| 70: | seal member | | |
| 100: | glow plug assembly having dual terminals of the present invention | | |
| 200: | thermostat | 210: | connector |
| 220: | working fluid | | |
| 230: | operator | | |
| 300: | ECU | B: | weld bead |

## Claims

1. A glow plug assembly having dual terminals, wherein the assembly is configured to enable a fast response and reliable control thereof by preventing noise generation caused by grounding, the assembly comprising:
a housing extending in an axial direction;
a heating tube coupled to a lower part of the housing, and
filled with insulation powder therein;
a cap fixed to an upper end of the housing;
a first terminal and a second terminal of which upper parts are fixed to the cap, and lower parts enter inside the heating tube; and
a heating coil of which opposite ends are respectively engaged with second ends of the first terminal and the second terminal, and a winding part is placed close to an inner circumferential surface of the heating tube,
wherein the first terminal is configured to be relatively shorter than the second terminal in length and is engaged with a first end of the heating coil at the second end thereof, and
the second terminal extends downward to be relatively longer than the first terminal in length, and has a bent part that leads the second terminal to a center of the wound heating coil so as to secure an insulation space relative to the heating coil, and is engaged with a second end of the heating coil extending down to an inside lower part of the heating tube.

2. The assembly of claim 1, wherein
the winding part of the heating coil has an eccentric upper end with which the first terminal is engaged, and
the bent part of the second terminal leads the second terminal to the center of the heating coil while enabling the second terminal and the first terminal to secure a standardized distance therebetween.

3. The assembly of claim 2, wherein the bent part of the second terminal is sheathed or coated with an insulation material.

4. The assembly of claim 1, wherein each of the first terminal and the second terminal has a square cross-section so as to secure an insulation distance therebetween.

5. The assembly of claim 4, wherein the heating coil is resistance-welded to surfaces of the first and the second terminals at bent parts formed by bending the opposite ends of the heating coil in an inward direction of the winding part of the heating coil.

6. The assembly of claim 1, wherein the assembly is employed for use in an electronic thermostat that controls temperature of a coolant of a vehicle engine.
